# EUROPÄISCHE PATENTSCHRIFT

(11) **EP 2 560 366 B1**
(45) Veröffentlichungstag und Bekanntmachung des Hinweises auf die Patenterteilung: **18.09.2013**
(21) Anmeldenummer: 12176554.9
(22) Anmeldetag: 16.07.2012
(51) Int. Cl.: H04N 5/225, G01B 11/25, H04N 13/02, H04N 9/31

(54) **3D-Kamera und Verfahren zur Überwachung eines Raumbereichs**
3D camera and method for monitoring a room
Caméra 3D et procédé de surveillance d'une pièce

(30) Priorität: 18.08.2011 DE 102011052802
(43) Veröffentlichungstag der Anmeldung: 20.02.2013
(73) Patentinhaber: SICK AG, 79183 Waldkirch (DE)
(72) Erfinder: Hammes, Markus, Dr., 79104 Freiburg (DE); Mack, Stefan, Dr., 79104 Freiburg (DE)
(74) Vertreter: Hehl, Ulrich

(56) Entgegenhaltungen:
- EP-A1- 2 280 239
- US-A1- 2001 013 924
- US-A1- 2004 021 833
- US-A1- 2007 165 243

## Beschreibung

Die Erfindung betrifft eine 3D-Kamera mit einer Beleuchtungseinheit und ein Verfahren zur Überwachung eines Raumbereichs nach dem Oberbegriff von Anspruch 1 beziehungsweise 15.

Im Gegensatz zu einer herkömmlichen Kamera nimmt eine 3D-Kamera auch eine Tiefeninformation auf und erzeugt somit dreidimensionale Bilddaten, die auch als Entfernungsbild oder Tiefenkarte bezeichnet werden. Die zusätzliche Entfernungsdimension lässt sich in einer Vielzahl von Anwendungen nutzen, um mehr Informationen über Objekte in der von der Kamera erfassten Szenerie zu gewinnen.

Ein Beispiel dafür ist die Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein. Mit der zusätzlichen Tiefeninformation lassen sich dreidimensionale Schutzbereiche definieren, die genauer an die Gefahrensituation anpassbar sind als zweidimensionale Schutzfelder, und es kann auch besser beurteilt werden, ob sich eine Person in kritischer Weise an die Gefahrenquelle annähert.

In einer weiteren Anwendung werden erfasste Bewegungen als Befehl an eine mit der 3D-Kamera verbundene Steuerung interpretiert. Dazu werden beispielsweise Gesten erfasst. Obwohl dies in erster Linie aus der Unterhaltungselektronik bekannt ist, kann es auch genutzt werden, um einen Sensor in der Sicherheitstechnik zu bedienen oder zu konfigurieren, wie etwa in der DE 10 2010 017 857 beschrieben.

Ein bekanntes Prinzip zur Erfassung dreidimensionaler Bilddaten beruht auf Triangulation unter Zuhilfenahme einer aktiven Musterbeleuchtung. Bei stereoskopischen Systemen werden dann jeweils mindestens zwei Aufnahmen aus unterschiedlicher Perspektive erzeugt. In den überlappenden Bildbereichen werden gleiche Strukturen identifiziert und aus der Disparität und den optischen Parametern des Kamerasystems mittels Triangulation Entfernungen und somit das dreidimensionale Bild beziehungsweise die Tiefenkarte berechnet.

Eine Stereokamera ist prinzipiell auch in der Lage, passiv zu arbeiten, d.h. ohne eine eigene Musterbeleuchtung. Für eine zuverlässige Bildauswertung, ganz besonders im Rahmen der Sicherheitstechnik, besteht aber der Anspruch, die dreidimensionalen Bilddaten in Form einer dichten Tiefenkarte zu erzeugen, also einen zuverlässigen Abstandswert für jeden auszuwertenden Bildbereich und bevorzugt nahezu jeden Bildpunkt verfügbar zu haben. Ist die zu überwachende Szenerie kontrastschwach oder weist Bereiche mit wenig Struktur auf, so wird dies mit einem passiven Sensor nicht erreicht. Große strukturlose Flächen oder zueinander ähnliche Strukturmerkmale können eine eindeutige Zuordnung von Bildbereichen beim Auffinden der Korrespondenzen zwischen den Strukturelementen der Bilder verhindern. Die Folge sind Lücken in den dreidimensionalen Bildern oder fehlerhafte Berechnungen der Entfernungen.

Andere Triangulationssysteme verwenden nur eine Kamera und werten die Veränderungen des projizierten Musters durch Objekte in verschiedenen Entfernungen aus. Dazu wird dem System das Beleuchtungsmuster eingelernt und so eine Erwartungshaltung für die Bilddaten bei verschiedenen Objektentfernungen und -strukturen generiert. Eine Möglichkeit besteht darin, das Beleuchtungsmuster auf Objekten, insbesondere einer Fläche, in verschiedenen Entfernungen als Referenzbild einzulernen. In einem derartigen System ist eine aktive Beleuchtung von vorne herein unverzichtbar.

Aus der EP 2 166 304 A1 ist eine Beleuchtungseinheit für eine stereoskopische Sicherheitskamera bekannt. Dabei wird ein selbstunähnliches Beleuchtungsmuster mit Hilfe eines optischen Phasenelements erzeugt, das von einer divergenten Laserlichtquelle durchstrahlt wird. Mit einem solchen Phasenelement sind die notwendigen Intensitäten des Beleuchtungsmusters in einer gewünschten Reichweite nicht zu erzielen.

In der US 2007/0263903 A1 erzeugt ein stereoskopisches Kamerasystem mittels einer Beleuchtungseinheit ein strukturiertes Beleuchtungsmuster, welches dann verwendet wird, um Entfernungen zu berechnen. Dabei entsteht das Muster, indem ein diffraktives optisches Element mit einem Laser oder einer LED beleuchtet wird. Problematisch bei der Verwendung eines diffraktiven optischen Elements ist, dass ein relativ großer Lichtanteil in nullter Beugungsordnung transmittiert wird. Aus Gründen der Augensicherheit kann deshalb diese Beleuchtungseinheit nicht mit den erforderlichen Lichtstärken betrieben werden.

In der WO 2009/093228 A2 wird deshalb in einer ähnlichen Anordnung ein zweites diffraktives optisches Element nachgeordnet. Der Lichtstrahl nullter Beugungsordnung wird auf diese Weise nochmals verteilt.

Die Verwendung von Beleuchtungseinheiten auf Basis diffraktiver optischer Elemente hat aber den weiteren Nachteil, dass die dafür als Leuchtmittel erforderlichen Singlemode-Laserdioden mit sehr kleiner Emitterfläche nur mit relativ geringer Ausgangsleistung deutlich unterhalb einem Watt verfügbar sind und nur eine begrenzte Lebensdauer haben. Dies wirkt sich nachteilig auf den Sichtbereich oder Bildfeldwinkel, die Reichweite, die Belichtungszeit und die Detektionsfähigkeit beziehungsweise Verfügbarkeit aus. Damit sind derartige Beleuchtungseinheiten gerade zur Beleuchtung größerer Bereiche in größeren Entfernungen, wie sie bei Anwendungen in der Sicherheitstechnik erforderlich sind, nur eingeschränkt verwendbar.

In einem anderen bekannten Ansatz, der beispielsweise in der US 2008/0240502 A1 beschrieben wird, erzeugt ein Dia ein Punktmuster für einen 3D-Sensor. Die Verwendung eines Projektionsverfahrens mit einem Dia ist aber energetisch und damit ökonomisch nur begrenzt effizient. Die dunklen Bereiche des Beleuchtungsmusters werden hart abgeschattet und nicht energieeffizient umverteilt, so dass das abgeschattete Licht nur zur Erwärmung und nicht zur Ausleuchtung des Überwachungsbereichs beträgt. Je geringer der Füllgrad des Musters ist, also das Verhältnis von Transmissionszu Gesamtfläche des Dias, desto geringer auch der Wirkungsgrad. Das wirkt sich deshalb besonders nachteilig aus, weil bereits ein Füllgrad von beispielsweise 10-20% für die Erfassung dichter Tiefenkarten ausreicht. Damit bleiben 80-90% der Ausgangsleistung ungenutzt. Dies ist nicht nur energetisch ineffizient, sondern treibt auch die Herstellungskosten in die Höhe, weil der Preis von Laserdioden in etwa linear mit der optischen Ausgangsleistung skaliert.

Gemäß US 2010/0118123 A1 wird ein spezielles Dia mit einer Vielzahl unregelmäßig angeordneter Mikrolinsen eingesetzt. Das führt aber in der Praxis nur zu einem ausreichend kontrastierten Beleuchtungsmuster, wenn ein Lochblendenfeld (Pinholearray) nachgeschaltet wird, um Streulicht und ähnliche Störeffekte abzustreifen. Bei Verwendung eines Lasers als Lichtquelle werden zudem Modenblenden benötigt, um eine ausreichende Strahlqualität zu erreichen. Damit wird insgesamt ein recht komplexes und aufwändiges optisches System erforderlich.

Die EP 2 280 239 A1 offenbart eine Beleuchtungsvorrichtung zur Beleuchtung eines Überwachungsbereichs. Dabei wird eine Lichtquelle durch ein Mikrolinsenfeld mit verkippten Mikrolinsen oder eine Hintereinanderanordnung eines ebenen Mikrolinsenfeldes mit einem Prismenfeld zu einer rechteckförmigen Beleuchtung aufgezogen. Diese Beleuchtung wird dazu genutzt, mit Hilfe eines Mustererzeugungselements einen im Wesentlichen rechteckigen Teilbereich des Überwachungsbereichs mit einem strukturierten Beleuchtungsmuster auszuleuchten.

Aus der US 2004/0021833A1 ist ein Bildprojektor bekannt, welcher ein organisches Elektrolumineszenz-Element mit einer Vielzahl einzeln modulierbarer Pixel aufweist. Das derart erzeugte Lichtmuster wird über eine Projektionslinse abgebildet. Dem Elektroluminszenz-Element ist in einer Ausführungsform ein zweidimensionales Feld von pyramidenförmigen Mikroprismen vorgeordnet.

Es ist daher Aufgabe der Erfindung, die Erzeugung eines Beleuchtungsmusters für eine 3D-Kamera zu verbessern.

Diese Aufgabe wird durch eine 3D-Kamera und ein Verfahren zur Überwachung eines Raumbereichs nach Anspruch 1 beziehungsweise 15 gelöst. Dabei geht die Erfindung von dem Grundgedanken aus, das Licht einer Beleuchtungseinheit mit Hilfe einer Vielzahl von Mikrooptiken umzuverteilen, um dadurch ein unregelmäßiges Beleuchtungsmuster zu erzielen. Um die einleitend beschriebenen Nachteile bei Verwendung von Mikrolinsen zu vermeiden, werden dann erfindungsgemäß nicht abbildende Mikrooptiken verwendet, um die erforderliche unregelmäßige Struktur des Beleuchtungsmusters zu erreichen. Jedes einer Vielzahl von Einzelemittern der Beleuchtungseinheit erzeugt einen Einzellichtstrahl, der durch Ablenken an einer zugehörigen Mikrooptik ein lateral versetztes virtuelles Bild des Einzelemitters und bei Auftreffen auf ein Objekt in der Szenerie ein Musterelement bildet.

Dabei wird unter einer unregelmäßigen Struktur oder einer unregelmäßigen Anordnung von Musterelementen eine solche verstanden, die keine oder zumindest möglichst wenige Scheinkorrelationen bei der Bildauswertung verursacht. Im Idealfall ist die Anordnung und damit das Beleuchtungsmuster selbstunähnlich, kann also zumindest lokal innerhalb der relevanten Korrelationsfenster nicht durch einfache Symmetrieoperationen wie Translationen oder Drehungen in sich selbst überführt werden. Bei Stereokameras sind hier in erster Linie Translationen parallel zu der Stereobasis relevant, also der Verbindungsachse der Projektionszentren beider Kameras.

Die Erfindung hat den Vorteil, dass Beleuchtungsmuster unter optimaler Lichtausbeute mit besonders hoher optischer Ausgangsleistung bei hoher Effizienz erzeugt werden können. Zugleich besteht eine hohe Flexibilität bei der Wahl des Beleuchtungsmusters oder konkret der Punktanordnung der in der Szenerie auftreffenden Einzellichtstrahlen der Einzelemitter. Mit derselben Lichtquelle entstehen mittels unterschiedlicher Mikrooptikarrays unterschiedliche Beleuchtungsmuster, beispielsweise für unterschiedliche Reichweitenvarianten der 3D-Kamera. Ein Mikrooptikarray ist verhältnismäßig einfach herzustellen.

Das Mikrooptikarray ist bevorzugt ein Mikroprismenarray, wobei die nichtabbildenden Mikrooptiken als Prismen ausgebildet sind, welche die Lichtstrahlen der Einzelemitter jeweils in unterschiedliche Richtungen ablenken. Derartige Mikroprismenfelder können sehr einfach durch ein Prägeverfahren hergestellt werden. Durch die Prismen werden die Strahlkeulen der Einzelstrahlen der Einzelemitter separat abgelenkt.

Die Prismen weisen bevorzugt eine Fresnelstruktur aus. Damit kann durch Strukturierung der Prismen die Geometrie des Mikroprismenfeldes beeinflusst, beispielsweise eine Dicke reduziert werden.

Die Prismen sind bevorzugt untereinander unterschiedlich ausgebildet und transmittieren somit einfallende Lichtstrahlen in unterschiedlichen Ablenkwinkeln. Damit entsteht eine größere Freiheit, das resultierende Beleuchtungsmuster zu gestalten, und die Struktur des Beleuchtungsmusters hängt nicht allein von der Anordnung der Prismen innerhalb des Mikrooptikarrays ab. Werden alternativ Prismen mit gleichmäßigen Ablenkwinkeln verwendet, so müssen die Prismen zwingend irregulär auf dem Mikrooptikarray angeordnet werden, um ein unregelmäßiges Beleuchtungsmuster zu erreichen.

Die Mikrooptiken sind bevorzugt unregelmäßig angeordnet. Wie soeben beschrieben, könnte die Unregelmäßigkeit des Beleuchtungsmusters auch allein durch unterschiedliche Ablenkwinkel der einzelnen Mikrooptiken erzielt werden. Durch eine unregelmäßige Anordnung gibt es aber zusätzliche Stellschrauben für die Struktur des Beleuchtungsmusters.

Die Einzelemitter sind in einer alternativen Ausführungsform unregelmäßig angeordnet. Ein solches Emitterarray ist im Vergleich zu einem unregelmäßigen Mikrooptikarray aufwändig herzustellen. Es gibt dann insgesamt drei verschiedene Ansatzpunkte, ein unregelmäßiges Beleuchtungsmuster zu erzeugen: die Anordnung der Einzelemitter, die Anordnung der Mikrooptiken und die Ausgestaltung der einzelnen Mikrooptiken, insbesondere deren Ablenkwinkel. Diese drei Variationsmöglichkeiten können einzeln oder in Kombination eingesetzt werden.

Das Halbleiterarray ist bevorzugt ein VCSEL-Array (Vertical-Cavity Surface-Emitting Laser). Durch eine unregelmäßige Maske für die Emitterflächen wird die gewünschte Anordnung der Einzelemitter des VCSEL-Arrays erreicht. Da aufgrund der erfindungsgemäßen Anordnung von der ursprünglichen Ausgangsleistung kaum etwas verloren geht, genügen VCSEL-Arrays mit moderaten Gesamtleistungen von einigen Watt, wobei natürlich auch VSCEL-Arrays mit höheren Leistungen insbesondere für sehr große Reichweiten eingesetzt werden können.

Das Halbleiterarray weist bevorzugt eine große Anzahl von mindestens tausend, zehntausend oder hunderttausend Einzelemittern auf. Solche Halbleiterarrays sind beispielsweise in Form von VCSEL-Arrays vergleichsweise kostengünstig erhältlich. Die große Anzahl an Einzelemittern mit einer entsprechend hohen Anzahl von Musterelementen in dem Beleuchtungsmuster führt zu einem Beleuchtungsmuster mit hinreichend feiner Struktur, um eine hohe Auflösung der 3D-Kamera zu gewährleisten.

Jeder Einzelemitter weist bevorzugt eine punktförmige Abstrahlfläche und das von dem Einzelemitter erzeugte Musterelement die Form der Abstrahlfläche auf. Damit entsteht ein Punktmuster, bei dem jedes Musterelement ein von einem Einzelemitter erzeugter Punkt ist, wobei dies natürlich nicht im strengen geometrischen Sinne als dimensionslos zu verstehen ist. Der Punkt hat eine gewisse endliche Ausdehnung und soll dies auch haben, um von dem Bildsensor erfasst zu werden.

Die Einzelemitter bilden bevorzugt mindestens zwei Gruppen, wobei eine Gruppe von Einzelemittern aktivierbar ist, ohne die übrigen Gruppen von Einzelemittern zu aktivieren. Damit kann zwischen verschiedenen Mustern umgeschaltet werden, die durch jeweils eine Gruppe oder eine Kombination mehrerer Gruppen entstehen. Im Grenzfall bildet jeder Einzelemitter eine eigene Gruppe und ist damit selektiv aktivierbar. Bildet man das Halbleiterarray mit einer höheren Packungsdichte von Einzelemittern aus, als für die Beleuchtung erforderlich ist, so bewirkt auch die Aktivierung von Teilmengen eine ausreichende Beleuchtung. Durch gezielte Auswahl solcher Teilmengen oder Gruppenkombinationen wird dann eine adaptive Anpassung des Beleuchtungsmusters an die gegebene Szenerie ermöglicht.

Die Einzelemitter sind bevorzugt mit untereinander unterschiedlichen Strömen ansteuerbar. Das lässt sich beispielsweise durch unterschiedliche Widerstände beziehungsweise Dicken der Zuleitungen erreichen. Die einzelnen Musterelemente werden durch den derart eingeführten Leistungsgradienten unterschiedlich hell. Auch das kann zur Adaption an eine Szenerie ausgenutzt werden. Ein Fall von allgemeinerem Interesse ist die Kompensation des Randabfalls. Das ist ein nachteiliger Effekt von Optiken beziehungsweise Bildsensoren, die zu ungleichmäßig beleuchteten Bildern mit dunkleren Rändern führen. Dies wird ausgeglichen, indem vorzugsweise die Einzelemitter in einem Außenbereich des Halbleiterarrays mit höheren Strömen ansteuerbar sind als Einzelemitter in einem Innenbereich des Halbleiterarrays. Somit kann über die Wahl der Elektrode auf dem Halbleiterarray der Lichtquelle und Einstellung des lokalen Stromflusses die lokale Helligkeitsverteilung des Beleuchtungsmusters angepasst und damit auch auf eine separate Homogenisierung der Helligkeit verzichtet werden.

Die Beleuchtungseinheit weist bevorzugt ein Abbildungsobjektiv auf, um das Beleuchtungsmuster in den Raumbereich zu projizieren. Als Abbildungsobjektiv genügt im einfachsten Fall eine einzige Linse. Das Abbildungsobjektiv kann aber auch reflexiv statt refraktiv ausgebildet sein. Die Einzelemitter müssen dank des Abbildungsobjektivs das Musterelement nicht im Fernfeld des Raumbereichs erzeugen, sondern das Muster wird schon kurz hinter dem Mustererzeugungselement abgegriffen und in den Raumbereich projiziert. Das Abbildungsobjektiv gleicht die Divergenz der Einzelemitter aus, die mit geringerer Abstrahlfläche zunimmt.

Abbildungsobjektiv und Halbleiterarray sind vorzugsweise zueinander verschieblich angeordnet, um unterschiedliche Teilmengen von Einzelemittern abzubilden. Es wird dabei jeweils ein anderer Bereich des Halbleiterarrays ausgenutzt, um das Beleuchtungsmuster zu erzeugen, um so eine Anpassung an die Szenerie zu ermöglichen.

Die 3D-Kamera ist bevorzugt als Stereokamera ausgebildet, wobei die Auswertungseinheit eine Stereoskopieauswertungseinheit aufweist, welche für die Anwendung eines Stereoalgorithmus ausgebildet ist, in dem zur Erzeugung eines dreidimensionalen Entfernungsbildes einander zugehörige Teilbereiche der von den beiden Kameras der Stereokamera aufgenommenen Bilder des von dem Beleuchtungsmuster ausgeleuchteten Raumbereichs erkannt und deren Entfernung anhand der Disparität berechnet wird. Der erfindungsgemäß erhöhte Kontrast in der Szenerie hilft dabei, auch bei einer ungünstigen Szenerie dichte Tiefenkarten zu erfassen.

Die 3D-Kamera ist bevorzugt als Sicherheitskamera ausgebildet, wobei die Auswertungseinheit dafür ausgebildet ist, unzulässige Eingriffe in den Raumbereich zu erkennen und daraufhin ein Abschaltsignal zu erzeugen, und wobei ein Sicherheitsausgang vorgesehen ist, um darüber ein Abschaltsignal an eine überwachte Maschine auszugeben. Gerade für sicherheitstechnische Anwendungen ist eine zuverlässige Erfassung einer dichten Tiefenkarte erforderlich. Dadurch wird die erforderliche sichere Objektdetektion ermöglicht.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Gesamtdarstellung einer Ausführungsform einer erfindungsgemäßen 3D-Kamera mit dem von deren Beleuchtungseinheit ausgeleuchteten Raumbereich; und
- Fig. 2: eine schematische Schnittansicht der Beleuchtungseinheit der 3D-Kamera gemäß Figur 1 mit einer dreidimensionalen Ansicht der Projektionsebene des entstehenden Beleuchtungsmusters.

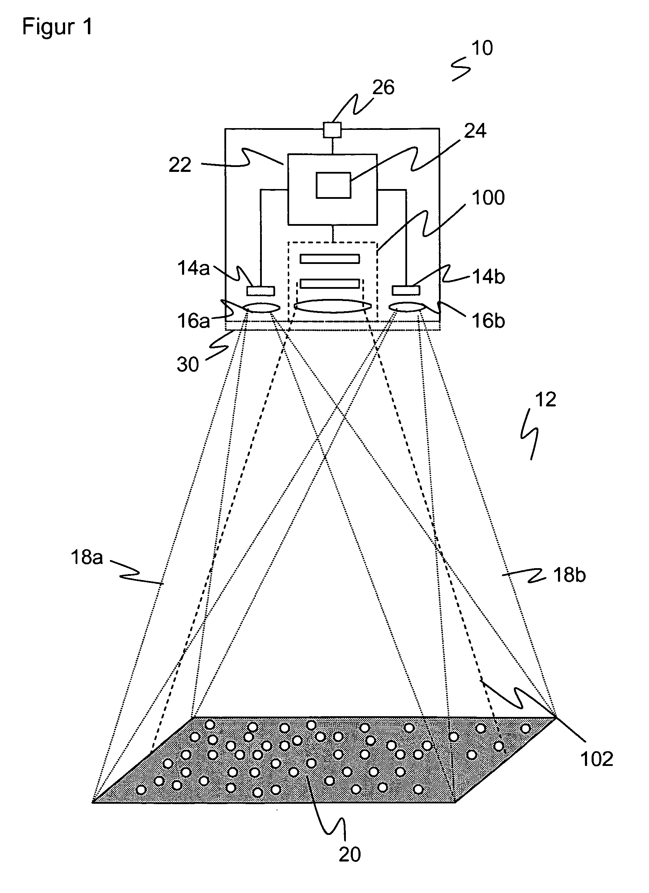

Figur 1 zeigt in einer schematischen dreidimensionalen Darstellung den allgemeinen Aufbau einer erfindungsgemäßen 3D-Kamera 10 nach dem Stereoskopieprinzip, die zur Überwachung eines Raumbereichs 12 eingesetzt ist. Die Erfindung wird an diesem Beispiel einer stereoskopischen 3D-Kamera beschrieben, umfasst aber auch andere triangulationsbasierte 3D-Kameras, etwa mit nur einem Bildsensor und Auswertung der entfernungsabhängigen Veränderungen eines Beleuchtungsmusters, wie sie beispielhaft in der Einleitung genannt sind. Mit Überwachung sind im speziellen sicherheitstechnische Anwendungen gemeint. Das kann die Absicherung einer gefährlichen Maschine sein, indem dreidimensionale Schutzbereiche in dem Raumbereich 12 definiert werden, die von der 3D-Kamera auf unzulässige Eingriffe überwacht werden. Mit der 3D-Kamera sind aber auch andere Anwendungen denkbar, beispielsweise das Erfassen von bestimmten Bewegungen, die als Befehl an die 3D-Kamera 10 oder an ein daran angeschlossenes System interpretiert werden.

In der 3D-Kamera 10 sind zwei Kameramodule in einem bekannten festen Abstand zueinander montiert und nehmen jeweils Bilder des Raumbereichs12 auf. In jeder Kamera ist ein Bildsensor 14a, 14b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 14a, 14b ist jeweils ein Objektiv mit einer abbildenden Optik zugeordnet, welches als Linse 16a, 16b dargestellt ist und in der Praxis als jede bekannte Abbildungsoptik realisiert sein kann. Der Sichtwinkel dieser Optiken ist in Figur 1 durch gestrichelte Linien dargestellt, die jeweils eine Sichtpyramide 18a, 18b bilden.

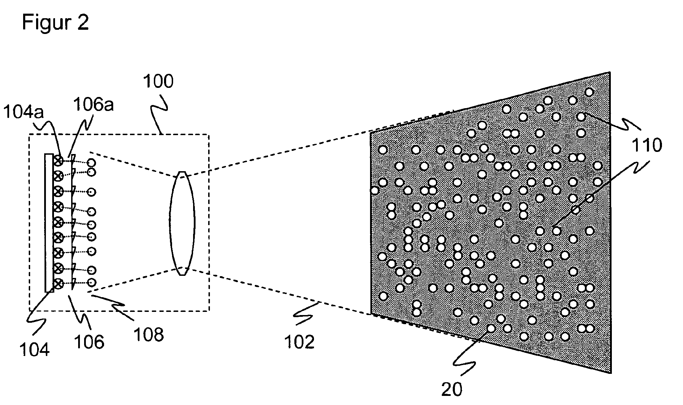

In der Mitte zwischen den beiden Bildsensoren 14a, 14b ist eine Beleuchtungseinheit 100 dargestellt, wobei diese räumliche Anordnung nur als Beispiel zu verstehen ist und die Beleuchtungseinheit ebenso asymmetrisch oder sogar außerhalb der 3D-Kamera 10 angeordnet sein kann. Die Beleuchtungseinheit 100 erzeugt in einem Beleuchtungsbereich 102 ein strukturiertes Beleuchtungsmuster 20 und wird weiter unten im Zusammenhang mit Figur 2 näher erläutert.

Mit den beiden Bildsensoren 14a, 14b und der Beleuchtungseinheit 100 ist eine kombinierte Auswertungs- und Steuerungseinheit 22 verbunden. Mittels der Steuerung 22 wird das strukturierte Beleuchtungsmuster 20 erzeugt und bei Bedarf in seiner Struktur oder Intensität variiert, und die Steuerung 22 empfängt Bilddaten der Bildsensoren 14a, 14b. Aus diesen Bilddaten berechnet eine Stereoskopieauswertungseinheit 24 der Steuerung 22 mit Hilfe einer stereoskopischen Disparitätsschätzung dreidimensionale Bilddaten (Entfernungsbild, Tiefenkarte) des Raumbereichs 12. Das strukturierte Beleuchtungsmuster 20 sorgt dabei für einen guten Kontrast und eine eindeutig zuordenbare Struktur jedes Bildelements in dem beleuchteten Raumbereich 12.

Erkennt die Steuerung 22 weiterhin einen unzulässigen Eingriff in einen Schutzbereich, so wird eine Warnung ausgegeben oder eine Gefahrenquelle abgesichert, beispielsweise ein Roboterarm oder eine sonstige Maschine gestoppt. Sicherheitsrelevante Signale, also vor allem das Abschaltsignal, werden über einen Sicherheitsausgang 26 ausgegeben (OSSD, Output Signal Switching Device). In nichtsicherheitstechnischen Anwendungen kann auf diese Funktionalität auch verzichtet werden. Ebenso ist denkbar, dass die dreidimensionalen Bilddaten lediglich als solche ausgegeben und weitere Auswertungen extern vorgenommen werden.

Um für sicherheitstechnische Anwendungen geeignet zu sein, ist die 3D-Kamera 10 fehlersicher ausgelegt. Dies bedeutet unter anderem, dass die 3D-Kamera 10 sich selber in Zyklen unterhalb der geforderten Ansprechzeit testen kann, insbesondere auch Defekte der Beleuchtungseinheit 100 erkennt und somit sicherstellt, dass das Beleuchtungsmuster 20 in einer erwarteten Mindestintensität verfügbar ist, und dass der Sicherheitsausgang 26 sicher, beispielsweise zweikanalig ausgelegt ist. Ebenso ist auch die Steuerung 22 mit der Stereoskopieeinheit 24 selbstsicher, wertet also zweikanalig aus oder verwendet Algorithmen, die sich selbst prüfen können. Derartige Vorschriften sind für allgemeine berührungslos wirkende Schutzeinrichtungen beispielsweise in der EN 61496-1 bzw. der EN 13849-1 normiert. Eine entsprechende Norm für Sicherheitskameras befindet sich in der Vorbereitung.

Figur 2 zeigt eine schematische Schnittansicht der Beleuchtungseinheit 100 mit einer dreidimensionalen Ansicht der Projektionsebene des entstehenden Beleuchtungsmusters 20. Die Beleuchtungseinheit 100 umfasst eine Lichtquelle 104, die mit einer Vielzahl von matrixförmig angeordneten Einzelemittern 104a ausgebildet ist. Dazu dient beispielsweise ein zweidimensionales VCSEL-Array. In der Schnittansicht der Figur 2 ist von der Matrixanordnung der Einzelemitter 104a nur eine Zeile zu erkennen.

Die Einzelemitter 104a sind bei einem üblichen, kommerziell erhältlichen VCSEL-Array regelmäßig angeordnet. Das entstehende Beleuchtungsmuster 20 soll aber unregelmäßig, stochastisch verteilt beziehungsweise selbstunähnlich sein. Deshalb ist der Lichtquelle 104 ein Mikrooptikarray 106 mit einer Vielzahl von Mikrooptiken 106a vorgeordnet.

Die Mikrooptiken 106a sind in dieser Ausführungsform rein schematisch dargestellte Prismen. Durch eine unregelmäßige Anordnung der Mikrooptiken 106a entstehen unterschiedliche Ablenkungsrichtungen für die jeweils zugeordneten Einzelemitter 104a. Es ist auch denkbar, die Prismen alternativ oder zusätzlich untereinander unterschiedlich zu gestalten, so dass sie auch bei gleicher relativer Lage gegenüber dem zugeordneten Einzelemitter 104a eine unterschiedliche Ablenkung bewirken. Anstelle von Prismen können auch andere nicht abbildende Mikrooptiken eingesetzt werden, beispielsweise durch Verwendung eines transmissiven Gitters.

Wegen der unterschiedlichen Ablenkungsrichtungen erzeugt das als Prismenfeld ausgebildete Mikrooptikarray 106 für jeden Einzelemitter 104a stochastisch versetzte virtuelle Punktbilder, die in Figur 2 schematisch durch Punktsymbole 108 repräsentiert sind. Die Punktsymbole 108 bilden deshalb eine ungleichmäßige Zeile. Der stochastische Versatz betrifft aber ganz analog auch die Richtung senkrecht zur Papierebene.

Mit Hilfe eines Abbildungsobjektivs wird das Beleuchtungsmuster 20 in den Raumbereich 12 projiziert. Das Abbildungsobjektiv ist im einfachsten Fall eine Sammellinse, kann aber in an sich bekannter Weise auch andere oder mehrere optische Elemente aufweisen. In dem Beleuchtungsmuster 20 entspricht jedes Musterelement 110 einem Einzelemitter 104a, dessen Sendestrahl durch das nicht abbildende Mikrooptikarray 106 aus der ursprünglich regelmäßigen Anordnung abgelenkt wurde. Deshalb bilden die Musterelemente 110 in ihrer Gesamtheit ein unregelmäßiges Beleuchtungsmuster 20, das auch einer strukturlosen Szenerie die erforderliche Struktur aufprägt und die Erkennung von Scheinkorrespondenzen durch einen Stereoalgorithmus verhindert. Alternativ zu einem Stereoalgorithmus kann die Veränderung der erwarteten Struktur des Beleuchtungsmusters 20 durch Objekte in der Szenerie ausgewertet werden.

Die Einzelemitter 104a können mit gleicher optischer Ausgangsleistung betrieben werden. Dann sind die einzelnen Musterelemente untereinander gleich hell. In einer vorteilhaften Weiterbildung wird davon aber gezielt abgewichen, beispielsweise indem die Einzelemitter 104a mit unterschiedlichen Strömen angesteuert werden. Dies lässt sich erreichen, indem die Einzelemitter 104a einzeln ansteuerbar sind. Eine andere Möglichkeit, bei der mit einer einheitlichen Spannung gearbeitet und auf eine individuelle Ansteuerung verzichtet werden kann, sind unterschiedliche Designs der Einzelemitter 104a, etwa unterschiedliche Widerstände in den Zuleitungen durch unterschiedliche Leitungsdicken oder dergleichen. Damit werden Teilbereiche des Beleuchtungsmusters 20 gezielt aufgehellt oder abgedunkelt. Eine Anwendung ist eine Randbereichsüberhöhung mit besonders hellen Rändern des Beleuchtungsmusters 20, um einen entsprechenden Randbereichsabfall der Bildsensoren 14a-b beziehungsweise der Optiken 16a-b zu kompensieren. So werden besonders homogen ausgeleuchtete Bilder aufgenommen. Dazu werden die Einzelemitter 104a in einem Außenbereich des Halbleiterarrays der Lichtquelle 104 stärker bestromt als in dessen Innerem und senden somit mehr Licht aus.

Das Beleuchtungsmuster 20 kann in unterschiedlichen Varianten der 3D-Kamera 10 durch Austausch des Mikrooptikarrays 106 verändert werden. Eine Anpassbarkeit ohne Umbau der 3D-Kamera 10 ist durch eine vorteilhafte Weiterbildung möglich, bei welcher die Einzelemitter 104a in zwei oder noch mehr Gruppen aufgeteilt werden. Die Gruppen können dabei einzeln angesteuert werden, so dass ihre jeweiligen Einzelemitter 104a wahlweise aktiv oder inaktiv sind oder unterschiedlich hell leuchten. Damit können mit derselben Beleuchtungseinheit 100 unterschiedliche Beleuchtungsmuster 20 erzeugt werden, um sich an Anwendungen, 3D-Kameras oder Szenerien anzupassen. Wird eine größere Anzahl solcher Gruppen gebildet, so bietet die Kombinatorik gleichzeitig aktiver Gruppen vielfältige Variationsmöglichkeiten. Im Grenzfall sind die Einzelemitter 104a sogar einzeln ansteuerbar. Man kann dann die allgemeine Packungsdichte der Einzelemitter 104a etwas höher wählen als bei Ausführungsformen ohne solche Gruppen, damit auch dann, wenn einige Gruppen nicht aktiv sind, das Beleuchtungsmuster 20 noch den erforderlichen Füllgrad aufweist.

Weiterhin ist denkbar, das Halbleiterarray 104 gegenüber der Abbildungsoptik 108 verschieblich anzuordnen. Durch entsprechende Justage wird dann ein Teilbereich des Halbleiterarrays 104 ausgewählt, der als Beleuchtungsmuster 20 projiziert wird. Auch auf diese Weise kann eine Anpassung erfolgen.

## Patentansprüche

1. 3D-Kamera (10) zur Überwachung eines Raumbereichs (12), wobei die 3D-Kamera (10) mindestens einen Bildsensor (14a-b) zur Aufnahme von Bilddaten aus dem Raumbereich (10), eine Auswertungseinheit (22, 24) zur Erzeugung eines Entfernungsbildes mit dreidimensionalen Bilddaten aus den Bilddaten des Bildsensors (14a-b) und eine Beleuchtungseinheit (100) mit einer Lichtquelle (104) und einem vorgeordneten Mikrooptikarray (106) mit einer Vielzahl von Mikrooptiken (106a) aufweist, die durch Umverteilung des Lichts der Beleuchtungseinheit (100) den Raumbereich (12) mit einem unregelmäßigen Beleuchtungsmuster (20) beleuchten,
**dadurch gekennzeichnet,**
**dass** die Lichtquelle (104) ein Halbleiterarray mit einer Vielzahl von Einzelemittern (104a) aufweist, die jeweils einen Einzellichtstrahl erzeugen, und dass das Mikrooptikarray (106) nicht abbildende Mikrooptiken (106a) aufweist, die unregelmäßig angeordnet und/oder untereinander unterschiedlich gestaltet sind und so durch unterschiedliche Ablenkungsrichtungen eines Einzellichtstrahls jeweils ein Musterelement des unregelmäßigen Beleuchtungsmusters erzeugen.

2. 3D-Kamera (10) nach Anspruch 1,
wobei das Mikrooptikarray (106) ein Mikroprismenarray ist, wobei die nichtabbildenden Mikrooptiken (106a) als Prismen ausgebildet sind, welche die Lichtstrahlen der Einzelemitter (104a) jeweils in unterschiedliche Richtungen ablenken.

3. 3D-Kamera (10) nach Anspruch 2,
wobei die Prismen (1 06a) eine Fresnelstruktur aufweisen.

4. 3D-Kamera (10) nach Anspruch 2 oder 3,
wobei die Prismen (106a) untereinander unterschiedlich ausgebildet sind und somit einfallende Lichtstrahlen in unterschiedlichen Ablenkwinkeln transmittieren.

5. 3D-Kamera (10) nach einem der vorhergehenden Ansprüche,
wobei die Mikrooptiken (106a) unregelmäßig angeordnet sind.

6. 3D-Kamera (10) nach einem der vorhergehenden Ansprüche,
wobei die Einzelemitter (104a) unregelmäßig angeordnet sind.

7. 3D-Kamera (10) nach einem der vorhergehenden Ansprüche,
wobei das Halbleiterarray (104) ein VCSEL-Array ist.

8. 3D-Kamera (10) nach einem der vorhergehenden Ansprüche,
wobei jeder Einzelemitter (104a) eine punktförmige Abstrahlfläche aufweist, und wobei das von dem Einzelemitter (104a) erzeugte Musterelement die Form der Abstrahlfläche aufweist.

9. 3D-Kamera (10) nach einem der vorhergehenden Ansprüche,
wobei Einzelemitter (1 04a) mindestens zwei Gruppen bilden, und wobei eine Gruppe von Einzelemittern (1 04a) aktivierbar ist, ohne die übrigen Gruppen von Einzelemittern (1 04a) zu aktivieren.

10. 3D-Kamera (10) nach einem der vorhergehenden Ansprüche,
wobei die Einzelemitter (104a) mit untereinander unterschiedlichen Strömen ansteuerbar sind, insbesondere Einzelemitter (104a) in einem Außenbereich des Halbleiterarrays (104) mit höheren Strömen ansteuerbar sind als Einzelemitter (1 04a) in einem Innenbereich des Halbleiterarrays (104).

11. 3D-Kamera (10) nach einem der vorhergehenden Ansprüche,
wobei die Beleuchtungseinheit (100) ein Abbildungsobjektiv (108) aufweist, um das Beleuchtungsmuster (20) in den Raumbereich (12) zu projizieren.

12. 3D-Kamera (10) nach einem der vorhergehenden Ansprüche,
wobei Abbildungsobjektiv (108) und Halbleiterarray (104) zueinander verschieblich angeordnet sind, um unterschiedliche Teilmengen von Einzelemittern (104a) abzubilden.

13. 3D-Kamera nach einem der vorhergehenden Ansprüche,
die als Stereokamera (10) ausgebildet ist, und wobei die Auswertungseinheit (22) eine Stereoskopieauswertungseinheit (24) aufweist, welche für die Anwendung eines Stereoalgorithmus ausgebildet ist, in dem zur Erzeugung eines dreidimensionalen Entfernungsbildes einander zugehörige Teilbereiche der von den beiden Kameras der Stereokamera (10) aufgenommenen Bilder des von dem Beleuchtungsmuster (20) ausgeleuchteten Raumbereichs (12) erkannt und deren Entfernung anhand der Disparität berechnet wird.

14. 3D-Kamera (10) nach einem der vorhergehenden Ansprüche,
die als Sicherheitskamera ausgebildet ist, wobei die Auswertungseinheit (22) dafür ausgebildet ist, unzulässige Eingriffe in den Raumbereich (12) zu erkennen und daraufhin ein Abschaltsignal zu erzeugen, und wobei ein Sicherheitsausgang (26) vorgesehen ist, um darüber ein Abschaltsignal an eine überwachte Maschine auszugeben.

15. Verfahren zu Überwachung eines Raumbereichs (12), wobei Bilddaten aus dem Raumbereich (12) aufgenommen werden und aus den Bilddaten ein Entfernungsbild mit dreidimensionalen Bilddaten erzeugt wird, wobei der Raumbereich (12) von einer Beleuchtungseinheit (100) mit einer Lichtquelle (104) und einem vorgeordneten Mikrooptikarray (106) mit einer Vielzahl von Mikrooptiken (106a) durch Umverteilung des Lichts der Beleuchtungseinheit (100) mit einem unregelmäßigen Beleuchtungsmuster (20) beleuchtet wird,
**dadurch gekennzeichnet,**
**dass** von der als ein Halbleiterarray mit einer Vielzahl von Einzelemittern (104a) ausgebildeten Lichtquelle (104) eine entsprechende Anzahl von Einzellichtstrahlen ausgesandt wird, die von dem Mikrooptikarray (106) nicht abbildend und aufgrund unterschiedlicher Anordnung und/oder untereinander unterschiedlicher Gestaltung der Mikrooptiken (106a) in unterschiedlichen Ablenkungsrichtungen in das unregelmäßige Beleuchtungsmuster (20) abgelenkt werden.

## Claims

1. A 3D camera (10) for monitoring a spatial zone (12), wherein the 3D camera (10) has at least one image sensor (14a-b) for taking image data from the spatial zone (10), an evaluation unit (22, 24) for generating a distance image with three-dimensional image data from the image data of the image sensor (14a-b) and an illumination unit (100) with a light source (104) and an upstream microoptical array (106) with a plurality of microoptical elements (106a) which illuminate the spatial zone (12) with an irregular illumination pattern (20) by a redistribution of the light of the illumination unit (100),
**characterized in that**
the light source (104) has a semiconductor array with a plurality of individual emitters (104a) each generating an individual light beam, and **in that** the microoptical array (106) has non-imaging microoptical elements (106a) which are arranged irregularly and/or have a mutually different design so that they respectively generate a pattern element of the irregular illumination pattern by different deflection directions of an individual light beam.

2. A 3D camera (10) in accordance with claim 1,
wherein the microoptical array (106) is a microprism array, wherein the non-imaging microoptical elements (106a) are formed as prisms which deflect the light beams of the individual emitters (104a) in respective different directions.

3. A 3D camera (10) in accordance with claim 2,
wherein the prisms (106a) have a Fresnel structure.

4. A 3D camera (10) in accordance with claim 2 or 3,
wherein the prisms (106a) have a mutually different design and thus transmit incident light beams at different deflection angles.

5. A 3D camera (10) in accordance with any of the preceding claims,
wherein the microoptical elements (106a) are arranged irregularly.

6. A 3D camera (10) in accordance with any of the preceding claims,
wherein the individual emitters (104a) are arranged irregularly.

7. A 3D camera (10) in accordance with any of the preceding claims,
wherein the semiconductor array (104) is a VCSEL array.

8. A 3D camera (10) in accordance with any of the preceding claims,
wherein each individual emitter (104a) has a dot-shaped radiation surface, and wherein the pattern element generated by the individual emitter (104a) has the shape of the radiation surface.

9. A 3D camera (10) in accordance with any of the preceding claims,
wherein individual emitters (104a) form at least two groups, and wherein a group of individual emitters (104a) can be activated without activating the other groups of individual emitters (104a).

10. A 3D camera (10) in accordance with any of the preceding claims,
wherein the individual emitters (104a) can be controlled with mutually different currents, wherein in particular individual emitters (104a) in an outer region of the semiconductor array (140) can be controlled by higher currents than individual emitters (104a) in an inner region of the semiconductor array (104).

11. A 3D camera (10) in accordance with any of the preceding claims,
wherein the illumination unit (100) has an imaging objective (108) to project the illumination pattern (20) into the spatial zone (12).

12. A 3D camera (10) in accordance with any of the preceding claims,
wherein the imaging objective (108) and the semiconductor array (104) are arranged displaceable with respect to one another to image different subsets of individual emitters (104a).

13. A 3D camera in accordance with any of the preceding claims, which is configured as a stereo camera (10), and wherein the evaluation unit (22) has a stereoscopy evaluation unit (24) which is configured for the application of a stereo algorithm in which mutually associated part regions of the images of the spatial zone (12) illuminated by the illumination pattern (20) and taken by the two cameras of the stereo camera (10) are recognized and their distance is calculated with reference to the disparity to generate a three-dimensional distance image.

14. A 3D camera (10) in accordance with any of the preceding claims, which is designed as a safety camera, wherein the evaluation unit (22) is designed to recognize unpermitted intrusions into the spatial zone (12) and to thereupon generate a switch-off signal, and wherein a safety output (26) is provided to output a switch-off signal via it to a monitored machine.

15. A method of monitoring a spatial zone (12), wherein image data are taken from the spatial zone (12) and a distance image with three-dimensional image data is generated from the image data, wherein the spatial zone (12) is illuminated with an irregular illumination pattern (20) by an illumination unit (100) with a light source (104) and an upstream microoptical array (106) with a plurality of microoptical elements (106a) by a redistribution of the light of the illumination unit (100),
**characterized in that** from the light source (104) designed as a semiconductor array having a plurality of individual light emitters (104) a corresponding number of individual light beams is transmitted which are deflected in different deflection directions into the irregular illumination pattern (20) by the microoptical array (106) in a non-imaging manner and due to different arrangement and/or mutually different design of the microoptical elements (106a).

## Revendications

1. Caméra 3D (10) pour la surveillance d'une région spatiale (12), ladite caméra 3D (10) comprenant au moins un capteur d'images (14a-b) pour l'enregistrement de données d'images provenant de la région spatiale (12), une unité d'évaluation (22, 24) pour engendrer une image d'éloignement avec des données image tridimensionnelles provenant des données d'images du capteur d'images (14a-b) et une unité d'éclairage (100) avec une source de lumière (104) et un réseau micro-optique (106) agencé en avant et comportant une pluralité d'éléments micro-optiques (106a) qui éclairent la région spatiale (12) avec un motif d'éclairage irrégulier (20) par modification de la répartition de la lumière de l'unité d'éclairage (100),
**caractérisée en ce que**
la source de lumière (104) comprend un réseau de semi-conducteurs avec une pluralité d'émetteurs individuels (104a) qui engendrent chacun un rayon de lumière individuel, et **en ce que** le réseau micro-optique (106) comprend des éléments micro-optiques (106a) qui ne forment pas d'image, qui sont agencés irrégulièrement et/ou sont conçus de façon différente les uns par rapport aux autres, et engendrent ainsi, par des directions de déflexion différentes d'un rayon de lumière individuel, respectivement un élément de motif du motif d'éclairage irrégulier.

2. Caméra 3D (10) selon la revendication 1,
dans laquelle le réseau micro-optique (106) est un réseau de microprismes, dans lequel les éléments micro-optiques (106a) qui ne forment pas d'image sont réalisés comme des prismes qui dévient les rayons de lumière des émetteurs individuels (104a) respectivement dans des directions différentes.

3. Caméra 3D (10) selon la revendication 2,
dans laquelle les prismes (106a) présentent une structure de Fresnel.

4. Caméra 3D (10) selon la revendication 2 ou 3,
dans laquelle les prismes (106a) sont réalisés de manière différente les uns par rapport aux autres et transmettent ainsi les rayons de lumière incident sous des angles de déflexion différents.

5. Caméra 3D (10) selon l'une des revendications précédentes,
dans laquelle les éléments micro-optiques (106a) sont agencés irrégulièrement.

6. Caméra 3D (10) selon l'une des revendications précédentes,
dans laquelle les émetteurs individuels (104a) sont agencés irrégulièrement.

7. Caméra 3D (10) selon l'une des revendications précédentes,
dans laquelle le réseau de semi-conducteurs (104) est un réseau VCSEL.

8. Caméra 3D (10) selon l'une des revendications précédentes,
dans laquelle chaque émetteur individuel (104a) comporte une surface de rayonnement de forme ponctuelle, et dans laquelle l'élément de motif engendré par l'émetteur individuel (104a) présente la forme de la surface de rayonnement.

9. Caméra 3D (10) selon l'une des revendications précédentes,
dans laquelle les émetteurs individuels (104a) forment au moins deux groupes, et dans laquelle un groupe d'émetteurs individuels (104a) peut être activé sans activer les autres groupes d'émetteurs individuels (104a).

10. Caméra 3D (10) selon l'une des revendications précédentes,
dans laquelle les émetteurs individuels (104a) peuvent être pilotés avec des courants mutuellement différents, en particulier dans laquelle des émetteurs individuels (104a) dans une zone extérieure du réseau de semi-conducteurs (104) peuvent être pilotés avec des courants plus intenses que les émetteurs individuels (104a) dans une zone intérieure du réseau de semi-conducteurs (104).

11. Caméra 3D (10) selon l'une des revendications précédentes,
dans laquelle l'unité d'éclairage (100) comprend un objectif d'imagerie (108), afin de de projeter le motif d'éclairage (20) dans la région spatiale (12).

12. Caméra 3D (10) selon l'une des revendications précédentes,
dans laquelle l'objectif d'imagerie (108) et le réseau de semi-conducteurs (104) sont agencés de manière déplaçable l'un par rapport à l'autre, afin de produire des images de groupes partiels différents d'émetteurs individuels (104a).

13. Caméra 3D (10) selon l'une des revendications précédentes,
réalisée sous la forme de caméra stéréoscopique (10), dans laquelle l'unité d'évaluation (22) comprend une unité d'évaluation stéréoscopique (24) qui est réalisée pour l'application d'un algorithme stéréoscopique dans lequel, pour engendrer une image d'éloignement tridimensionnelle, des zones partielles mutuellement associées des images, prises par les deux caméras de la caméra stéréoscopique (10), de la région spatiale (12) éclairée par le motif d'éclairage (20) sont reconnues et leur éloignement est calculé au moyen de la disparité.

14. Caméra 3D (10) selon l'une des revendications précédentes,
réalisée sous forme de caméra de sécurité, dans laquelle l'unité d'évaluation (22) est réalisée pour reconnaître des interventions inadmissibles dans la région spatiale (12) et pour engendrer ensuite un signal de coupure, et dans laquelle il est prévu une sortie de sécurité (26) pour délivrer par celle-ci un signal de coupure à une machine surveillée.

15. Procédé pour la surveillance d'une région spatiale (12), dans lequel on enregistre des données d'images provenant de la région spatiale (12) et on engendre à partir des données d'images une image d'éloignement avec des données d'images tridimensionnelles, dans lequel la région spatiale (12) est éclairée par une unité d'éclairage (100) avec une source de lumière (104) et avec un réseau micro-optique agencé en avant (106) avec une pluralité d'éléments micro-optiques (106a), avec un motif d'éclairage irrégulier (20) par modification de la répartition de la lumière de l'unité d'éclairage (100),
**caractérisé en ce que**
depuis la source de lumière (104), réalisée sous forme de réseau de semi-conducteurs avec une pluralité d'émetteurs individuels (104a), on émet un nombre correspondant de rayons de lumière individuels qui sont déviés par le réseau micro-optique (106) sans produire d'image et dans des directions de déflexion différentes en raison d'un agencement différent et/ou en raison d'une configuration mutuellement différente des éléments micro-optiques (106a) pour donner le motif d'éclairage irrégulier (20).
